# EUROPÄISCHE PATENTSCHRIFT

(11) **EP 1 225 434 B1**
(45) Veröffentlichungstag und Bekanntmachung des Hinweises auf die Patenterteilung: **06.10.2004**
(21) Anmeldenummer: 02000648.2
(22) Anmeldetag: 11.01.2002
(51) Int. Cl.: G01M 7/08, G01M 19/00, G01M 17/007

(54) **Verfahren zur Messung der Schliessgeschwindigkeit**
Méthode pour mesurer la vitesse de fermeture
Method for measuring the closing speed

(30) Priorität: 16.01.2001 DE 20100714 U
(43) Veröffentlichungstag der Anmeldung: 24.07.2002
(73) Patentinhaber: Peiseler GmbH, 82140 Olching (DE)
(72) Erfinder: Negendank, Volker, Dipl.-Ing., 82343 Pöcking (DE)
(74) Vertreter: Beck, Alexander

(56) Entgegenhaltungen:
- EP-A- 0 616 926
- DE-A- 19 860 168
- DE-A- 19 963 043
- US-A- 5 528 937

## Beschreibung

Die vorliegende Erfindung betrifft ein Verfahren zur Messung der Schließgeschwindigkeit einer Tür, einer Klappe, eines Tors oder eines Fensters.

In der Automobilindustrie stellt sich zunehmend die Aufgabe, am Ende des Fertigungsvorganges eines Kraftfahrzeuges die Türfedern und Türdämpfer so einzustellen, daß die Tür mit angenehmen Geräusch, leicht und dicht schließt. Zu diesem Zweck muß die Schließgeschwindigkeit der Tür gemessen werden, während die Tür auf die Türdichtung fällt und das Türschloß einrastet.

Der hierzu nächstgelegene Stand der Technik ergibt sich aus der DE 198 60 168 A1. Gemäß diesem Stand der Technik soll die Größe eines Schließimpulses gemessen werden, mit dem die Tür oder Klappe zur Einleitung des Schließvorganges beaufschlagt wird. Dies ist also die Kraft, die aufgebracht werden muss, um die Schließbewegung einer entsprechenden Tür oder Klappe einzuleiten.

Erheblich wichtiger für die korrekte Funktion beispielsweise einer Kraftfahrzeugtür ist jedoch die Bestimmung und Einstellung derjenigen Geschwindigkeit, mit der die Tür schließlich gegen die entsprechende Türdichtung schlägt und sodann ins Schloss fällt.

Es ist daher Aufgabe der vorliegenden Erfindung, ein Verfahren zur Messung der Schließgeschwindigkeit einer Tür, einer Klappe, eines Tores oder eines Fensters anzugeben, mit der die entsprechende Tür oder Klappe gegen eine. zugehörige Türdichtung schlägt und sodann ins Schloss fällt, das universell eingesetzt werden kann und die auch im Zuge der Fließbandfertigung benutzt werden kann.

Diese Aufgabe wird erfindungsgemäß durch ein Verfahren gelöst, bei dem die Schließgeschwindigkeit durch Messung der negativen Beschleunigung ermittelt wird, die entsteht, wenn die Tür, die Klappe, das Tor oder das Fenster gegen die Dichtung schlägt.

Die Idee der vorliegenden Erfindung beruht dabei einerseits darauf, daß man die Geschwindigkeit, mit der die Tür gegen die Türdichtung schlägt und dann im Türschloß einrastet, indirekt über die entsprechende (negative) Beschleunigung messen kann, die entsteht, wenn die Tür gegen die Türdichtung schlägt. Eine weitere erfinderische Idee dabei ist, daß eine solche Vorrichtung ohne bauliche Veränderung der Tür mittels einer Saugglocke an der Tür für die Messungen angebracht und nachher abgenommen werden kann, ohne daß irgendwelche Spuren zurückbleiben. Bei Autotüren wird die Saugglocke vorzugsweise an einer Fensterscheibe der Tür angeordnet.

Bei Metalltüren ohne Fenster kann zur Befestigung entweder ebenfalls eine Saugglocke, oder aber auch ein Magnet dienen. Darüber hinaus können zur Befestigung auch die bekannten Adhäsionsverbindungen ("Klettverbindung", "Velcrotape") dienen.

Mit dem erfindungsgemäßen Verfahren können natürlich auch andere, auch automatische Türen, beispielsweise Zug- oder Flugzeugtüren oder automatische Brandabschnittstüren an Häusern hinsichtlich ihrer Schließgeschwindigkeit beurteilt werden.

Im Folgenden wird ein Ausführungsbeispiel der vorliegenden Erfindung anhand der beigefügten Zeichnung näher erläutert. Es zeigt:

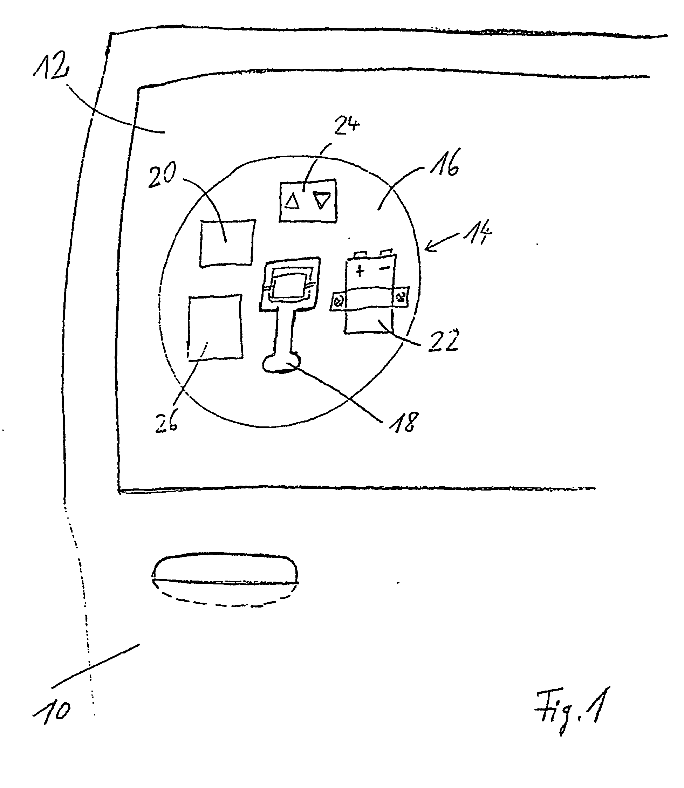

Fig. 1 eine Vorrichtung zur Messung der Schließgeschwindigkeit einer Tür, angebracht an dem Fenster einer Kraftfahrzeugtür.

Figur 1 zeigt eine schematisch dargestellte Kraftfahrzeugtür 10, an deren Fenster 12 eine Vorrichtung 14 zur Messung der Schließgeschwindigkeit dieser Tür 10 angeordnet ist. Wie dargestellt, umfaßt die Vorrichtung 14 in erster Linie eine handelsübliche Saugglocke 16, die im wesentlichen aus einer kreisrunden Metallscheibe mit außen umlaufenden, nach vorne überstehendem Rand besteht, auf dem diesen übergreifend eine Gummischeibe aufgelegt ist. Diese ist im Mittelpunkt mit einem Stift verbunden, der nach hinten durch die Metallscheibe hindurchtritt, und dort mittels eines Hebels 18 nach hinten gezogen und in dieser Stellung arretiert werden kann, so daß die Gummischeibe in den von der Gummischeibe, der Metallscheibe und dem Rand gebildeten Hohlraum nach hinten gezogen wird. Geschieht dies, nachdem die Saugglocke 16 auf einer glatten Oberfläche aufgelegt worden ist, saugt sich die Saugglocke 16 durch den durch diese Bewegung entstehenden Unterdruck zwischen der Gummischeibe und der Unterlage an letzterer fest. Ist die Unterlage ausreichend glatt und sauber, so vermag eine solche Saugglocke alleine durch den Unterdruck sehr fest zu haften, und fällt auch bei Belastung mit einigem Gewicht und mit Erschütterungen nicht ab.

Erfindungsgemäß wird auf einer solchen Saugglocke 16 ein Beschleunigungssensor 20 angeordnet. Dieser Beschleunigungssensor mißt die Beschleunigungskräfte in einer Achse. Bei dem hier dargestellten Ausführungsbeispiel steht diese Achse senkrecht auf der Zeichnungsebene, d.h., die Achse verläuft parallel zu der Schließbewegungsrichtung der Kraftfahrzeugtür 10. Außerdem ist auf der Saugglocke 16 noch eine Stromversorgung 22, im vorliegenden Fall eine Batterie oder ein Akkumulator, angeordnet. Grundsätzlich ist aber auch eine anders geartete Stromversorgung, beispielsweise über Solarzellen oder über Mikrowellenenergie denkbar. Weiter ist auf der Saugglocke 16 noch eine Anzeigevorrichtung 24 und eine Auswerteelektronik 26 angebracht.

Bei der Anzeigevorrichtung 24 kann es sich dabei sowohl, wie dargestellt, um eine optische als auch um eine akustische Anzeigevorrichtung handeln. Bei der akustischen Vorrichtung kann z. B. ein hoher Ton eine zu hohe Schließgeschwindigkeit, ein tiefer Ton eine zu niedrige Schließgeschwindigkeit anzeigen oder es wird für eine zu hohe Schließgeschwindigkeit eine Folge kurzer Töne angezeigt, während bei einer zu niedrigen Schließgeschwindigkeit eine Folge langer Töne angezeigt wird, und bei der richtigen Schließgeschwindigkeit ein Dauerton angezeigt wird.

Des weiteren kann eine Speichervorrichtung vorgesehen werden, bei der die Meßwerte für die Schließgeschwindigkeit gespeichert und den jeweiligen Fahrzeugen zugeordnet werden können.

Auf diese Weise könnte auch ein Protokoll der Einstellvorgänge erstellt werden.

Die Betriebsweise der beschriebenen Vorrichtung ist folgendermaßen:

Die beschriebene Vorrichtung dient zur Messung der Schließgeschwindigkeit einer Kraftfahrzeugtür 10. Zu diesem Zweck wird die Vorrichtung 14 bei geöffnetem Hebel 18 auf eine Fensterscheibe 12 der Autotür 10 aufgesetzt und die Saugglocke 16 mittels des Hebels 18 sodann an die Fensterscheibe 12 angesaugt. Nunmehr kann die Tür 10 geschlossen werden. Der Beschleunigungssensor 20 mißt die dabei auftretende Maximalbeschleunigung. Diese wird in der Auswerteelektronik 26 gespeichert und mit einem Sollwert, der vorgegeben werden kann, verglichen. Dieser Sollwert ergibt sich im Laufe der Entwicklung eines Kraftfahrzeuges für die optimale Schließgeschwindigkeit der Kraftfahrzeugtür, bei der sowohl ein leichtes Schließen der Tür als auch ein sicheres Zuhalten der Tür sowie ein angenehmes Schließgeräusch gewährleistet ist. Abhängig davon steuert die Auswerteelektronik 26 die Anzeigevorrichtung 24, auf der entweder ein nach oben oder ein nach unten zeigender Pfeil aufleuchtet, je nachdem, ob die Schließkraft höher oder niedriger eingestellt werden soll. Der entsprechende Monteur kann die Tür nun mehrfach schließen und jeweils die Türfedern, Türdämpfer oder Türlager entsprechend nachstellen, bis der Sollwert erreicht ist. Dann leuchten nach dem Schließen der Tür beide Anzeigepfeile auf.

Die beschriebene Vorgehensweise hat den Vorteil, daß an den Kraftfahrzeugtüren keine Veränderungen vorgenommen werden müssen. Dadurch, daß die Vorrichtung am Fenster, und nicht am Blech befestigt wird, ist auch eine Beschädigung des bei Neufahrzeugen noch weichen und damit empfindlichen Lackes ausgeschlossen. Dadurch daß die Stromversorgung in die Vorrichtung integriert werden kann, sind keine Kabel oder ähnliches erforderlich. Der entsprechende Monteur kann vielmehr die Vorrichtung in seiner Tasche oder in seinem Werkzeugkasten jederzeit mit sich führen. Es gibt auch keine Kabel, die den Betriebsablauf eines Fließbandes stören oder als Stolperfallen dienen könnten.

Nach der erfolgten Messung kann die Saugglocke einfach durch Öffnen des Hebels 18 wieder abgenommen werden.

Die Vorrichtung kann natürlich auch beispielsweise bei automatischen Brandabschnittsttüren zur Überprüfung einer ausreichenden Schließgeschwindigkeit angewendet werden. Dabei kann die Vorrichtung natürlich auch auf das lackierte Blech aufgesetzt werden. In solchen Fällen sind die Türen ja meist schon einige Tage oder Wochen lackiert, und die Lackierung ist nicht mehr so empfindlich wie bei Kraftfahrzeugen am Ende des Fließbandes.

Die Vorrichtung kann natürlich auch für Schiebetüren verwendet werden. Dabei muß lediglich die Meßachse des Sensors entsprechend um 90° gedreht werden. Dann läßt sich beispielsweise auch die korrekte Funktion von Zugtüren und automatischen Schiebetüren an Gebäuden überprüfen.

## Patentansprüche

1. Verfahren zur Messung der Schließgeschwindigkeit einer Tür, einer Klappe, eines Tores oder eines Fensters, die mit einem mit einer Dichtung versehenen Rahmen zusammenwirken, **dadurch gekennzeichnet daß** die Messung mittels einer Meßvorrichtung (14) durchgeführt wird, die mittels einer Saugglocke (16), oder mittels eines Magneten an der Tür angebracht wird, und die Schließgeschwindigkeit durch Messung der negativen Beschleunigung ermittelt wird, die entsteht, wenn die Tür, die Klappe, oder das Fenster gegen die Dichtung schlägt.

2. Verfahren nach Anspruch 1, **dadurch gekennzeichnet, daß** die Saugglocke an einem in der Tür angeordneten Fenster angesetzt wird.

## Claims

1. A method for measuring the closing speed of a door, a flap, a gate or a window which are co-operating with a frame provided with a seal, **characterised in that** the measurement is done by means of a measuring apparatus (14) which by means of a suction cup (16) or by means of a magnet is fixed to the door and the closing speed is determined by measuring the negative acceleration which is created when the door, the flap or the window is striking against the seal.

2. Method according to claim 1, **characterised in that** the suction cup is positioned on a window which is provided in the door.

## Revendications

1. Procédé pour mesurer la vitesse de fermeture d'une porte, d'une trappe, d'un portail ou d'une fenêtre, qui coopèrent avec un cadre pourvu d'un joint, **caractérisé en ce que** la mesure est effectuée au moyen d'un dispositif de mesure (14), qui est placé au moyen d'une cloche d'aspiration (16) ou au moyen d'un aimant sur la porte, et la vitesse de fermeture est déterminée par la mesure de l'accélération négative, qui se forme lorsque la porte, la trappe ou la fenêtre bute contre le joint.

2. Procédé selon la revendication 1, **caractérisé en ce que** la cloche d'aspiration est placée sur une fenêtre disposée dans la porte.
